Europäisches Patentamt

European Patent Office

Office européen des brevets

(19)

(11) Publication number: **0 166 598 B1**

# EUROPEAN PATENT SPECIFICATION

(12)

(45) Date of publication of patent specification: **15.05.91**   (51) Int. Cl.⁵: **G06K 9/62**

(21) Application number: **85304501.1**

(22) Date of filing: **25.06.85**

(54) Pattern recognition apparatus.

(30) Priority: **25.06.84 JP 131717/84**
**18.08.84 JP 171765/84**

(43) Date of publication of application:
**02.01.86 Bulletin 86/01**

(45) Publication of the grant of the patent:
**15.05.91 Bulletin 91/20**

(84) Designated Contracting States:
**DE FR GB**

(56) References cited:
**GB-A- 1 156 266**
**US-A- 3 182 290**
**US-A- 3 601 802**
**US-A- 4 288 782**

**NACHRICHTENTECHNISCHE ZEITSCHRIFT
N.T.Z., vol. 27, no. 6, pages 233-238; W.
SCHWERDTMANN: "Reduktion des Klas-
sifikationsfehlers durch angepasste
Musterentwicklung"**

(73) Proprietor: **FUJITSU LIMITED**
**1015, Kamikodanaka Nakahara-ku
Kawasaki-shi Kanagawa 211(JP)**

(72) Inventor: **Koezuka, Tetsuo
25-16, Mejirodai 3-chome
Hachioji-shi Tokyo 193(JP)**
Inventor: **Hiraoka, Noriyuki
11-10, Higashimagome 1-chome
Ota-ku Tokyo 143(JP)**
Inventor: **Tsukahara, Hiroyuki
Sakae-haitsu 202 16-17, Moto-cho
Atsugi-shi Kanagawa 243(JP)**
Inventor: **Nakashima, Masato
33-18, Mitakedai Midori-ku
Yokohama-shi Kanagawa 211(JP)**

(74) Representative: **Sunderland, James Harry et al
HASELTINE LAKE & CO Hazlitt House 28
Southampton Buildings Chancery Lane
London WC2A 1AT(GB)**

## Description

The present invention relates to a pattern recognition apparatus. In particular, it relates to an improved way of forming a featured template to be used when the patterns are compared and collated, and of weighting the featured template.

In a previously proposed method for recognising patterns, object patterns to be identified or recognised are compared and collated with template patterns previously registered, and a decision is made that the template pattern having the least degree of mismatching (or most degree of matching) is identified as corresponding to the object pattern.

The drawback to this type of pattern recognition is that there is poor discrimination between similar patterns. Namely, when very similar patterns are compared, incorrect identification may occur. This is because there are only a few mismatching portions between the similar patterns, and the degree of mismatching between an object pattern and any of a category of similar template patterns may be low, of the same order as the degree of mismatching (between the object pattern and its actual corresponding template pattern) caused by imperfections or quantum errors in the object pattern itself.

To remove the above-mentioned drawback, the following method is used. That is, difference portions between the similar patterns are registered as featured patterns, and are carefully compared and collated (i.e. weighted) with the object pattern to improve the recognition accuracy. However, in this method, it is necessary to obtain the feature points between pairs of the similar patterns and to preform a feature template.

US-A-3 182 290 discloses a character reading system having features corresponding to those of the preamble of accompanying claim 1. It relies on a map matching technique but concentrates on small areas having features which distinguish characters from each other. A gross recognition of an input character is performed to determine a group of characters to which it belongs, and then a fine recognition is performed by investigating such small areas so as to determine a particular character within the group.

According to the present invention, there is provided a pattern recognition apparatus comprising: an image input device operable to pick-up an image of an object pattern; an analog-digital converter operable to convert an analog image signal from said image input device to a binary signal; a frame memory operable to store said binary signal; a template memory operable to store a plurality of template patterns of character and/or image patterns; and a pattern matching circuit operable to compare the binary signal stored in said frame memory with the template patterns in said template memory; characterised by: a template matching circuit operable to compare the template patterns in the template memory with each other; and a featured template forming circuit operable automatically to form at least one featured template which is derived from mismatched portions of pairs of the template patterns and to register the same in said template memory, whereby the pattern matching circuit also compares the binary signal stored in said frame memory with the or each featured template, and a decision as to the pattern recognised is based on all said comparisons.

An embodiment of the present invention can provide a pattern recognition apparatus which can prevent mistakes in the recognition of, and between, similar characters or patterns.

An embodiment of the present invention can provide a pattern recognition apparatus which can carry out a recognition process easily and simply.

Reference is made, by way of example, to the accompanying drawings, in which:

Figure 1 is a block diagram showing a known pattern recognition apparatus;

Figure 2 is a block diagram showing one embodiment of a pattern recognition apparatus according to the present invention;

Figure 3 is a diagram for explaining template patterns;

Figure 4 is a diagram showing a process for forming a featured template; and

Figures 5 and 6 are flow charts for explaining the process for forming the featured template shown in Figure 4.

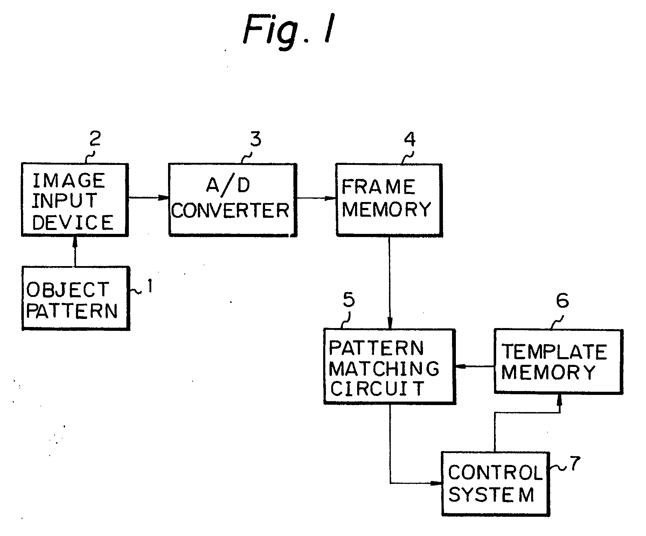

Figure 1 is a block diagram of a previously proposed pattern recognition apparatus. In Figure 1, the image of an object pattern 1 is picked-up by an image input device 2, and the picked-up analog video signal is converted to a digital signal in an analog-digital converter 3 and stored in a two-dimensional frame memory 4. Subsequently, template patterns stored in a template memory 6 and the digitized object pattern stored in the frame memory 4 are compared and collated in a pattern matching circuit 5, and the template pattern having the least mismatching is judged to correspond to the object pattern. This operation is controlled by a control system 7.

In the actual comparing and collating operations between patterns, to decrease the effects of quantum errors, etc. in the object pattern, a template made from an original or ideal pattern itself is not used as the template. Instead a broad template in which strokes in the original pattern are broad (thickened) and a narrow template in which strokes in the original pattern are narrow (thinned) are used for this purpose. Further, to increase the accuracy of the discrimination an object pattern is collated with a featured (feature) template.

When pattern matching is carried out by using these templates, the mismatching degree between the object pattern and a broad template, the mismatching degree between the object pattern and a narrow template, and the mismatching degree between the object pattern and a featured template, which is multiplied by a weighting factor, are obtained. All of these mismatching degrees are used in identification of the object pattern.

The accuracy of the pattern recognition apparatus is determined by the template patterns used in the comparison and collation operation, and therefore, it is important that good template patterns and featured template patterns be formed. However, the number of patterns used for forming the featured template is large since it is derived from combinations of template patterns. When forming the featured template, the combinations of similar patterns are decided by the operator, and the (difference) portions between the similar patterns to be featured are selected by the operator.

Accordingly, in the above-mentioned method, the featured template is not formed by a qualitative reference, so that it is vague and, at the same time, requires a large number of processes. Therefore, the required complete featured template cannot be formed.

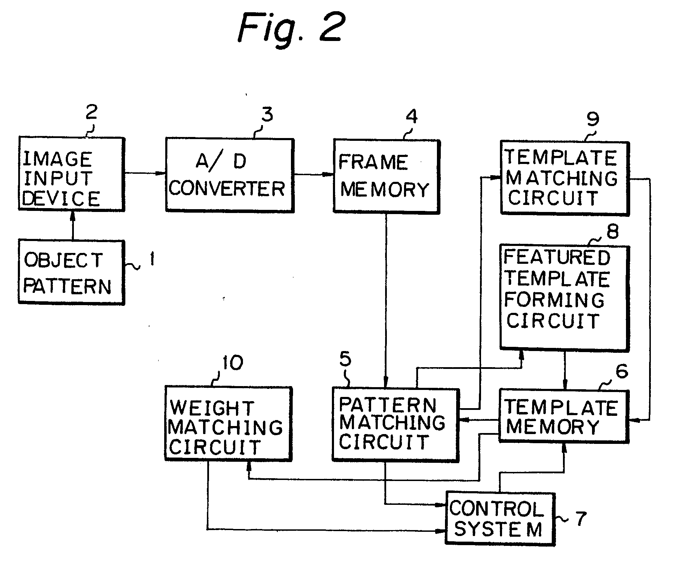

Figure 2 is a block diagram of one embodiment of the present invention. In Figure 2, the image of the object pattern is picked-up by an image input device 2, and the picked-up analog video signal is converted to a digital signal in an analog-digital converter 3 and stored in a two-dimensional frame memory 4. Subsequently, a template pattern stored in a template memory 6 and the digitized object pattern stored in the frame memory 4 are compared and collated in a pattern matching circuit 5, and the template pattern having the least mismatching is judged to be (correspond to) the object pattern. This operation is controlled by a control system 7, and is substantially the same as that in the previously proposed apparatus shown in Fig. 1.

In the present invention as shown in Fig. 2, a template matching circuit 9 is provided for forming a featured (feature) template. The template matching circuit 9 sends instructions to the template memory 6 to commence matching of pairs of templates and thus the template patterns are compared and collated for all combinations of the template patterns registered in the template memory 6, and then similar template pattern pairs are selected. Namely, the degree of mismatching between the template patterns (selected pairs) is equal to that registered in the template memory 6, which is smaller than a predetermined reference (amount).

Regarding the combination of similar patterns which are selected in accordance with the predetermined reference (amount) in the pattern matching circuit 5, mismatched patterns (differences) between the similar templates are sent to a featured template forming circuit 8, and featured templates are formed by matching the similar pattern pairs. These featured templates are registered in the template memory 6.

In the pattern recognition apparatus according to an embodiment of the present invention, briefly, when the object pattern and the featured template pattern formed by the template matching circuit 9 and the featured template forming circuit 8 are compared and matched, the number of mismatched bits weighted by a weight matching circuit for carrying out the comparison is counted, and the number of mismatched portions observed by the comparison with the ("broad" and "narrow") template pattern is added to the counted result and the object pattern is (thereby) judged.

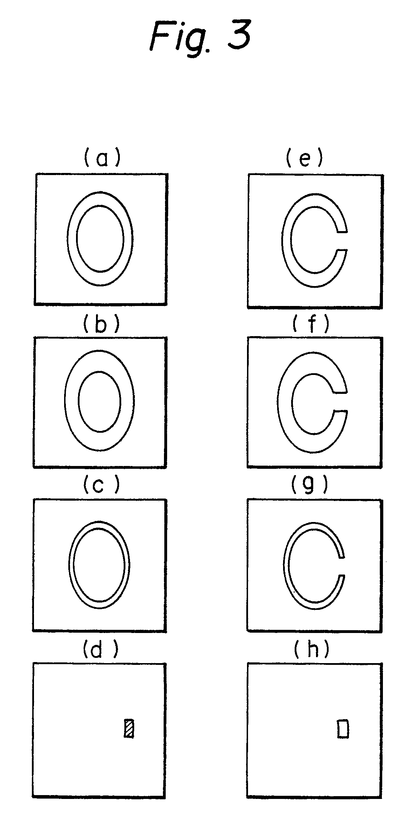

Next, a method for forming the featured template will be explained using the characters "O" and "C" as examples. Figure 3 shows the relationships between the original patterns, the broad templates, the narrow templates, and the featured templates. In Fig. 3(a) shows the original pattern of the character O, and (b) and (c), respectively, show the broad template and the narrow template of the character O. These patterns (b) and (c) are automatically formed from the original pattern (a). Pattern (d) shows a featured template of the character O when the character O is matched with the character C. Also, in Figure 3, (e) shows the original pattern of the character C, and (f) and (g) show the broad template and the narrow template of the character C. These patterns (f) and (g) are automatically formed from the original pattern (e). Pattern (h) shows a featured template of the character C when the character C is matched with the character O.

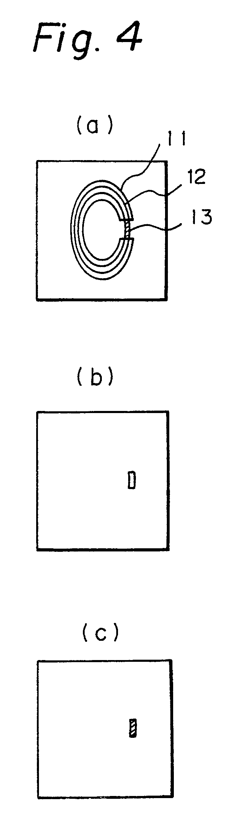

Figure 4 is a diagram explaining the process of forming the featured template. When forming the featured template, the broad template 11 of the character C and the narrow template 12 of the character O are matched as shown in Figure 4(a), and the portion 13 of the template of the character O which does not match the broad template 11 of the character C is registered as a feature of the background for the featured template of the character C, as shown in Figure 4(b), and is also registered as a feature of the character part for the featured template of the character O as shown in Figure 4(c). In the above-mentioned

3

description, the explanation concerns only the character O and the character C, however, in other combinations of characters, similar comparing and matching operations are carried out for only the combination of similar patterns in which the number of mismatched portions is smaller than the predetermined reference (amount).

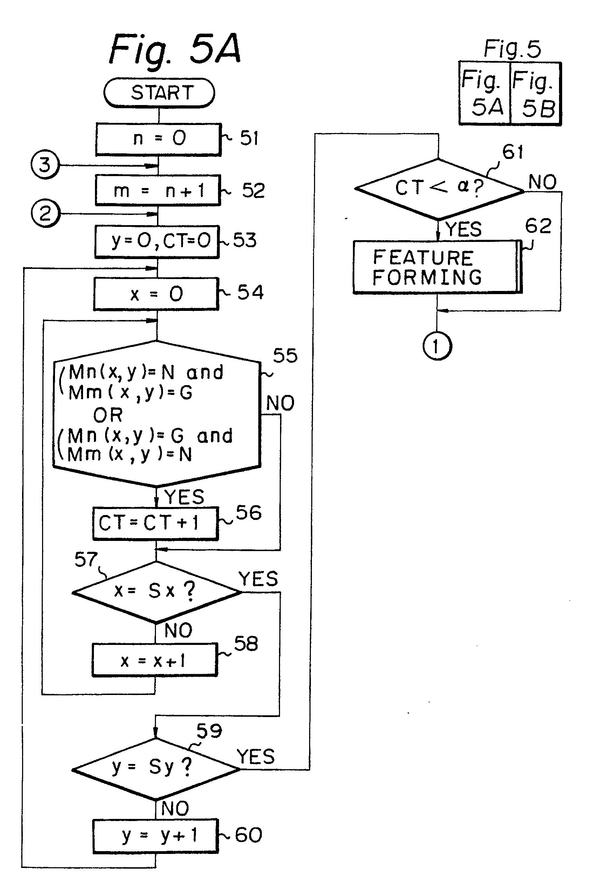

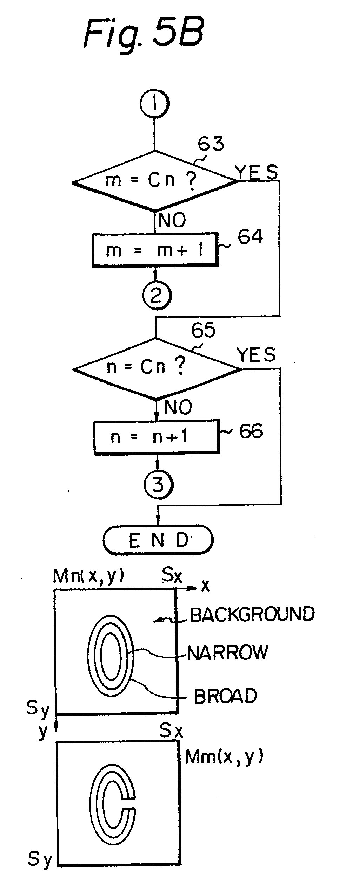

Figure 5 is a flow chart showing an algorithm for forming a featured template. In Figure 5, for example, $Mm(x, y)$ represents the character C, and $Mn(x, y)$ represents the character O. In Fig. 5, block 51 (there is selected) a template which may include the broad template and the narrow template. The template in block 51 is compared with all other registered templates in block 52. In block 53, the horizontal direction of the template is scanned and a mismatch counter CT is counted (reset). Next, in block 54, the vertical direction of the template is scanned. In block 55 a comparison is made for example between the broad template of O and the narrow template of C and also between the broad template of C and the narrow template of O, and it is determined whether either of the conditions (i) $Mn(x, y)$ is narrow character part and $Mm(x, y)$ is the background part, or (ii) $Mn(x, y)$ is the background part and $Mm(x, y)$ is narrow character part, is satisfied. When either condition is satisfied in block 55, the mismatch counter CT is counted up (incremented) in block 56. When neither condition is satisfied in block 55, the output of block 55 is supplied to block 57 and processing transfers to a next scanning. A similar operation is repeated for the horizontal and vertical directions in blocks 57, 58, 59, and 60. Block 61 judges whether or not the output of block 59 signifies a similar character (similar pattern pair).

The degree of mismatching $Q_{mn}$ of two characters or images (m, n) corresponding to (object) templates $Mm(x, y)$, $Mn(x, y)$ each comprising templates $Mm1(x, y)$, $Mm2(x, y)$ and $Mn1(x, y)$, $Mn2(x, y)$ respectively, is determined by the following equations:

$$Q_{mn1} = \sum_{\substack{x=0 \\ y=0}} (\overline{Mm1(x, y)} \text{ and } Mn2(x, y))$$

$$Q_{mn2} = \sum_{\substack{x=0 \\ y=0}} (Mm2(x, y) \text{ and } \overline{Mn1(x, y)})$$

$$Q_{mn} = Q_{mn1} + Q_{mn2}$$

wherein, $Mm1(x, y)$ and $Mn1(x, y)$ represent a broad template and $Mm2(x, y)$ and $Mn2(x, y)$ represent a narrow template.

This degree of mismatching is compared with a predetermined constant $\alpha$.

After a feature of the mismatching of one pair of templates is formed, the process is transferred via blocks 63, 64, 65, and 66, to a next template.

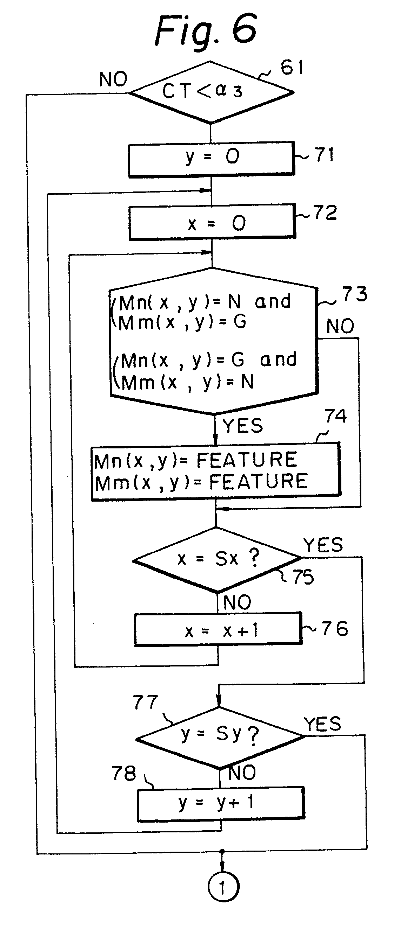

Figure 6 is a flow-chart showing an algorithm of the feature forming in block 62 in Figure 5. In Figure 6, blocks 71 to 78 show a similar operation to that shown in Figure 5.

As mentioned above, the present invention enables characters which cannot be discriminated (such as "O" and "C") by the conventional method to be discriminated in high recognition rate.

## Claims

1. A pattern recognition apparatus comprising:
   an image input device (2) operable to pick-up an image of an object pattern (1);
   an analog-digital converter (3) operable to convert an analog image signal from said image input device (2) to a binary signal;
   a frame memory (4) operable to store said binary signal;
   a template memory (6) operable to store a plurality of template patterns of character and/or image patterns; and
   a pattern matching circuit (5) operable to compare the binary signal stored in said frame memory (4) with the template patterns in said template memory (6);

characterised by:

a template matching circuit (9) operable to compare the template patterns in the template memory (6) with each other; and

a featured template forming circuit (8) operable automatically to form at least one featured template which is derived from mismatched portions of pairs of the template patterns and to register the same in said template memory (6), whereby the pattern matching circuit (5) also compares the binary signal stored in said frame memory (4) with the or each featured template, and a decision as to the pattern recognised is based on all said comparisons.

2. A pattern recognition apparatus according to claim 1, wherein the template patterns in said template memory (6) are compared with each other, and the mismatched portions of those pairs of the template pattern pairs having a degree of mismatching lower than a predetermined value are registered as features of said featured template.

3. A pattern recognition apparatus according to claim 1 or 2, wherein the template patterns of a character and/or image pattern in said template memory (6) comprise a broad template in which the template patterns are broad and a narrow template in which the template patterns are narrow, and wherein portions of the narrow template pattern of one of a first pair of template patterns that do not match a broad template pattern of the other one of said first pair are registered as a feature of a background part of the featured template of one of the said first pair, and as a feature of a character part of a featured template of the other one of said first pair.

4. A pattern recognition apparatus according to claim 1, 2 or 3, wherein a pattern weight matching circuit (10) which weights features of said featured template is provided.

5. A pattern recognition apparatus according to any preceding claim, wherein a pattern which includes mismatched parts of patterns formed by comparing a pair of the character and/or image patterns is used as said featured template.

## Revendications

1. Appareil de reconnaissance de forme comprenant :

un dispositif d'entrée d'image (2) pouvant fonctionner pour saisir une image d'une forme d'objet (1) ;

un convertisseur analogique-numérique (3) pouvant fonctionner pour convertir un signal d'image analogique provenant du dispositif d'entrée d'image (2) en un signal binaire ;

une mémoire de trame (4) pouvant fonctionner pour stocker le signal binaire ;

une mémoire de gabarit (6) pouvant fonctionner pour stocker une pluralité de formes de gabarit de caractère et/ou de formes d'image ; et

un circuit de correspondance de formes (5) pouvant fonctionner pour comparer le signal binaire stocké dans la mémoire de trame (4) avec les formes de gabarit dans la mémoire de gabarit (6) ; caractérisé par :

un circuit de correspondance de gabarits (5) pouvant fonctionner pour comparer les unes avec les autres les formes de gabarit dans la mémoire de gabarit (6) ; et

un circuit de formation de gabarit caractéritique (8) pouvant fonctionner automatiquement pour former au moins un gabarit caractéristique qui est dérivé de parties qui ne sont pas en correspondance de paires de formes de gabarit et pour enregistrer ce même gabarit caractéristique dans la mémoire de gabarit (6), et ainsi, le circuit de correspondance de formes (5) compare également le signal binaire stocké dans la mémoire de trame (4) avec le gabarit caractéristique ou avec chacun des gabarits caractéristiques, et une décision en tant que reconnaissance de la forme est basée sur l'ensemble de ces comparaisons.

2. Appareil de reconnaissance de forme selon la revendication 1, dans lequel les formes de gabarit contenues dans la mémoire de gabarit (6) sont comparées les unes aux autres et les parties non-correspondantes de ces paires de formes de gabarit qui ont un degré de non-correspondance inférieur à une valeur prédéterminée sont enregistrées en tant que caractéristiques du gabarit caractéristique.

3. Appareil de reconnaissance de forme selon la revendication 1 ou 2, dans lequel les formes de gabarit d'une forme de caractère et/ou d'une forme d'image contenue dans la mémoire de gabarit (6) comprennent un gabarit large pour lequel les formes de gabarit sont larges et un gabarit étroit pour lequel les formes de gabarit sont étroites, et dans lequel des parties de la forme de gabarit étroit de l'une des formes de la première paire de formes de gabarit qui ne sont pas correspondantes à une forme de gabarit large de l'autre forme de la première paire de formes de gabarit sont enregistrées en tant que caractéristique d'une partie qui constitue le fond du gabarit caractéristique de l'une des formes de la première paire de formes de gabarit et en tant que caractéristique d'une partie de caractère d'un gabarit caractéristique de l'autre forme de la première paire de formes de gabarits.

4. Appareil de reconnaissance de forme selon la revendication 1, 2 ou 3, dans lequel il est prévu un circuit d'étude de correspondance par évaluation de forme (10) qui évalue des caractéristiques du gabarit caractéristique.

5. Appareil de reconnaisance de forme selon l'une quelconque des revendications précédentes, dans lequel une forme qui comprend des parties non-correspondantes de formes formées par comparaison d'une paire de formes de caractère et/ou de formes d'image est utilisée en tant que gabarit caractéristique.

## Ansprüche

1. Mustererkennungsvorrichtung mit:
   einer Bildeingabevorrichtung (2), die betreibbar ist, um ein Bild eines Objektmusters (1) aufzunehmen;
   einem Analog-Digital-Konverter (3), der betreibbar ist, um ein analoges Bildsignal von der genannten Bildeingabevorrichtung (2) in ein binäres Signal zu konvertieren;
   einem Rahmenspeicher (4), der betreibbar ist, um das genannte binäre Signal zu speichern;
   einem Schablonenspeicher (6), der betreibbar ist, um eine Vielzahl von Schablonenmustern von Zeichen und/oder Bildmustern zu speichern; und
   einer Musteranpassungsschaltung (5), die betreibbar ist, um das binäre Signal, das in dem genannten Rahmenspeicher (4) gespeichert ist, mit den Schablonenmustern in dem genannten Schablonenspeicher (6) zu vergleichen;
   gekennzeichnet durch:
   eine Anpassungsschaltung (9), die betreibbar ist, um die Schablonenmuster in dem Schablonenspeicher (6) miteinander zu vergleichen; und
   eine Merkmalsschablonenbildungsschaltung (8), die automatisch betätigbar ist, um wenigstens eine Merkmals-Schablone, die von nicht übereinstimmenden Abschnitten eines Paares der Schablonenmuster abgeleitet ist, zu formen und um dieselbe in dem genannten Schablonenspeicher (6) zu registrieren, wodurch die Musterübereinstimmungsschaltung (5) auch das binäre Signal, das in dem genannten Rahmenspeicher (4) gespeichert ist, mit der oder jeder Merkmkals-Schablone vergleicht, und eine Entscheidung bezüglich des erkannten Musters auf all den genannten Vergleichen basiert.

2. Mustererkennungsvorrichtung nach Anspruch 1, bei der die Schablonenmuster in dem genannten Schablonenspeicher (6) miteinander verglichen werden, und die voneinander abweichenden Abschnitte von jenen Paaren der Schablonenmusterpaare, die einen Abweichungsgrad haben, der kleiner als ein vorbestimmter Wert ist, als Merkmale der genannten Merkmals-Schablone registriert werden.

3. Mustererkennungsvorrichtung nach Anspruch 1 oder 2, bei dem die genannten Schablonenmuster von einem Zeichen und/oder Bildmuster in dem genannten Schablonenspeicher (6) eine breite Schablone umfassen, in der die Schablonenmuster breit sind, und eine schmale Schablone, in der die Schablonenmuster schmal sind, und bei der Abschnitte der schmalen Schablonenmuster von einem von einem ersten Paar von Schablonenmustern, die nicht mit einem breiten Schablonenmuster des anderen des genannten ersten Paares übereinstimmen, als ein Merkmal eines Hintergrundabschnitts der Merkmals-Schablone von einem von dem genannten ersten Paar und als ein Merkmal eines Zeichenteils von einer Merkmals-Schablone von dem anderen einen von dem genannten ersten Paar registriert werden.

4. Mustererkennungsvorrichtung nach Anspruch 1, 2 oder 3, bei der eine Musterwichtungsübereinstimmungsschaltung (10) vorgesehen ist, welche die Merkmale der Merkmals-Schablone wichtet.

5. Mustererkennungsvorrichtung nach einem der vorhergehenden Ansprüche, bei der ein Muster, welches abweichende Teile von Mustern, die durch Vergleich eines Paares von Zeichen und/oder Bildmustern gebildet sind, enthält, als die genannte Merkmals-Schablone verwendet wird.

# Fig. I

Fig. 2

# Fig. 3

(a)

(b)

(c)

(d)

(e)

(f)

(g)

(h)

# Fig. 4

( a )

11
12
13

( b )

( c )

# Fig. 5A

Fig.5

| Fig. 5A | Fig. 5B |
|---------|---------|

START

n = O — 51

③ → m = n + 1 — 52

② → y = O, CT = O — 53

x = O — 54

$\begin{pmatrix} Mn(x,y)=N \text{ and} \\ Mm(x,y)=G \end{pmatrix}$
OR
$\begin{pmatrix} Mn(x,y)=G \text{ and} \\ Mm(x,y)=N \end{pmatrix}$ — 55    NO

YES

CT = CT + 1 — 56

57 — x = Sx ?    YES

NO

x = x + 1 — 58

59 — y = Sy ?    YES

NO

y = y + 1 — 60

CT < α ? — 61    NO

YES

FEATURE FORMING — 62

①

# Fig. 5B

# Fig. 6

```
              NO          ╱ CT < α₃ ╲ ～61
          ┌──────────────<           >
          │               ╲          ╱
          │                   │
          │            ┌──────────────┐
          │            │    y = 0     │ ～71
          │            └──────────────┘
          │                   │
          │  ┌────────────────┤
          │  │         ┌──────────────┐
          │  │         │    x = 0     │ ～72
          │  │         └──────────────┘
          │  │                │
          │  │  ┌─────────────┤
          │  │  │      ╱               ╲ ～73
          │  │  │     ╱ (Mn(x,y)= N and ╲
          │  │  │    │   Mm(x,y)= G      │
          │  │  │    │                   │  NO
          │  │  │    │  (Mn(x,y)= G  and │────────┐
          │  │  │     ╲  Mm(x,y)= N     ╱         │
          │  │  │      ╲               ╱          │
          │  │  │            │ YES                │
          │  │  │                     ～74        │
          │  │  │     ┌──────────────────┐        │
          │  │  │     │ Mn(x,y)= FEATURE │        │
          │  │  │     │ Mm(x,y)= FEATURE │        │
          │  │  │     └──────────────────┘        │
          │  │  │            │◄───────────────────┘
          │  │  │        ╱        ╲  YES
          │  │  │       ╱  x = Sx ? ╲─────────┐
          │  │  │       ╲           ╱         │
          │  │  │        ╲    ～75 ╱          │
          │  │  │          │ NO               │
          │  │  │     ┌──────────────┐        │
          │  │  └─────│   x = x+1    │ ～76    │
          │  │        └──────────────┘        │
          │  │            ┌──────────────────┘
          │  │      ╱        ╲  YES
          │  │  77 ╱  y = Sy ? ╲───────┐
          │  │     ╲           ╱       │
          │  │      ╲         ╱        │
          │  │          │ NO           │
          │  │   ┌──────────────┐      │
          │  └───│   y = y+1    │ 78   │
          │      └──────────────┘      │
          │                            │
          └────────────────────────────┤
                             ╱──╲
                            ( 1 )
                             ╲──╱
```